# FASCICULE DE BREVET EUROPEEN

(11) **EP 3 357 202 B1**
(45) Date de publication et mention de la délivrance du brevet: **27.10.2021**
(21) Numéro de dépôt: 16790638.7
(22) Date de dépôt: 29.09.2016
(51) Int. Cl.: H04L 12/28, H04L 12/703, H04L 29/14

(54) **SYSTÈME DE RESTAURATION DE SERVICES FOURNIS PAR UNE PASSERELLE RÉSIDENTIELLE**
SYSTEM ZUR WIEDERHERSTELLUNG VON DURCH EIN RESIDENTIAL-GATEWAY BEREITGESTELLTEN DIENSTEN
SYSTEM FOR RESTORING SERVICES PROVIDED BY A RESIDENTIAL GATEWAY

(30) Priorité: 30.09.2015 FR 1559282
(43) Date de publication de la demande: 08.08.2018
(73) Titulaire: ORANGE, 92130 Issy-les-Moulineaux (FR)
(72) Inventeur: BOUCADAIR, Mohamed, 35830 Betton (FR); JACQUENET, Christian, 35131 Pont-Pean (FR)
(86) Numéro de dépôt international: PCT/FR2016/052495
(87) Numéro de publication internationale: WO 2017/055761

(56) Documents cités:
- WO-A1-2010/044714
- WO-A1-2012/004503
- WO-A2-2007/106843
- FR-A1- 2 962 869
- US-A1- 2011 066 875

## Description

La présente invention concerne les passerelles résidentielles.

Plus particulièrement, l'invention concerne la restauration d'au moins un service de télécommunications auquel une passerelle résidentielle permet d'accéder, de manière à assurer la continuité de service en cas de panne. Par souci de brièveté, on dira ci-après qu'une passerelle est « en panne » lorsque qu'au moins un service auquel elle permet d'accéder en temps normal n'est plus accessible, ou lorsque la qualité d'au moins un service auquel elle permet d'accéder en temps normal est dégradée.

Le réseau IP (*Internet Protocol*) est désormais le support universel d'une multitude d'applications et de services, tels que la Voix sur IP (« Voice over IP », ou VoIP, en anglais) ou la télévision numérique (IPTV). C'est le réseau fédérateur adopté par les opérateurs de télécommunications pour mettre en œuvre leurs différentes offres de service. Depuis quelques années, cette démocratisation de l'Internet a fait du grand public l'une des cibles privilégiée des opérateurs de télécommunications, qui sont de plus en plus nombreux à se positionner sur ce segment de marché. Ce mouvement s'est accompagné du développement d'offres de services spécifiques adaptées à cette clientèle, mêlant plusieurs services exploitant ainsi les avantages du réseau IP. Parmi celles-ci, les offres dites multi-services, dont les offres dites « *Triple Play* » (car proposant simultanément un accès à Internet, à des contenus vidéo (dont la diffusion de programmes télévisés) et à des services conversationnels (téléphonie sur IP)), ont accaparé une part du marché croissante. Présentées la plupart du temps sous forme de forfaits, ces offres attirent en effet le grand public grâce à une richesse fonctionnelle accessible pour un prix raisonnable. Les opérateurs de télécommunications cherchent dès lors à se démarquer les uns des autres en augmentant et en diversifiant le nombre des services disponibles dans leurs « formules/forfait », afin de séduire puis fidéliser leurs clients grand-public, en particulier. A cet égard, tous les profils clients grand public constituent une cible marketing potentielle, des couples aux jeunes, en passant par les personnes d'un âge plus avancé.

L'un des facteurs communs aux offres de tous ces opérateurs est l'installation d'une passerelle résidentielle, souvent appelée «box», CPE (initiales des mots anglais «*Customer Premises Equipment*» signifiant « Equipement de la Résidence d'un Client »), ou HG (initiales des mots anglais *« Home Gateway* » signifiant « Passerelle Domestique »), et que l'on appellera simplement « passerelle » ci-après. Cet équipement, installé chez un client (qui peut être un particulier ou une entreprise) d'un opérateur de télécommunications ou d'un fournisseur de services, est l'élément concentrateur de l'ensemble des connexions permettant d'accéder aux services souscrits par le client et aux applicatifs utilisés par le client. En effet, il représente, comme son nom l'indique, une véritable passerelle entre, d'une part, l'opérateur ou le fournisseur de services, et d'autre part ses clients :
- en termes de connectivité - la passerelle résidentielle est raccordée au réseau de l'opérateur d'un côté, et fournit côté client un ensemble d'interfaces variées, par exemple une interface sans-fil telle que WLAN (initiales des mots anglais « *Wireless Local Area Network* » signifiant « Réseau Local Sans-fil ») ou Bluetooth, une prise RJ11 pour la téléphonie, des prises RJ45 pour la télévision numérique et les ordinateurs, ou des prises USB *(Universal Serial Bus) ;*
- en termes de services - elle gère l'ensemble des services souscrits par le client, ainsi que les fonctions qui permettent d'accéder à ces services : téléphonie, télévision, connexion Internet, équipements satellites, fonctions NAT (initiales des mots anglais « *Network Address Translator »* signifiant « Traducteur d'Adresse Réseau »), pare-feu, et ainsi de suite ;
- en termes d'applicatifs - elle comprend par exemple des logiciels spécifiques à l'opérateur pour la fourniture des services à ses clients, le diagnostic, ou la gestion automatique de mises à jour logicielles.

Par souci de brièveté, on dira ci-après qu'une passerelle « fournit » un service de télécommunications à l'utilisateur de cette passerelle, lorsque la passerelle permet à l'utilisateur *d'accéder à* ce service.

Malgré leur présence de plus en plus répandue au sein des foyers grand-public, ces passerelles résidentielles restent pour la plupart de leurs utilisateurs des équipements mal connus, voire « mystérieux ». Pire, la majorité des utilisateurs, une fois la passerelle installée lors de la souscription du service (si tant est que c'est le client qui procède lui-même à cette installation), n'intervient plus sur cet équipement. De fait, ces passerelles représentent de manière générale des sortes de « boîtes noires » méconnues de leurs utilisateurs, alors qu'elles sont le nœud central qui permet d'accéder à l'ensemble des services qu'ils utilisent quotidiennement.

Cette méconnaissance conduit même à un certain dédain pour cet équipement, souvent considéré comme un surcoût inutile (la passerelle étant louée au client la plupart du temps), ou comme un équipement à redémarrer électriquement en cas de problème affectant l'un des services.

La plupart des passerelles résidentielles disposent d'une interface Web de configuration et de gestion, accessible de manière protégée via HTTP *(HyperText Transfer Protocol*)*.* Cette interface est accessible via une URL (*Uniform Resource Locator)* qui peut prendre la forme d'une adresse prédéfinie (l'adresse IPv4 « 192.168.1.1 » ou un nom de service spécifique comme « MaBox », par exemple) ; un identifiant et un mot de passe sont généralement requis pour y accéder en mode administrateur. Une fois authentifié, le client (utilisateur) peut alors avoir accès à un certain nombre d'outils lui permettant d'agir directement sur les services et connexions gérées par sa passerelle résidentielle. Or cette interface d'administration de la passerelle est peu connue de la plupart des clients. De plus, pour en tirer profit, le client doit être généralement familier des termes techniques utilisés pour la description de ces services, sinon il ne pourra pas prévoir exactement l'impact des modifications qu'il apporte au travers de l'interface d'administration.

En d'autres termes, l'accès aux éléments de gestion (même basiques) de la passerelle résidentielle requiert de la part des clients grand-public un minimum de connaissances, réduisant *de facto* le nombre de clients capables d'exploiter ces capacités. Ce qui peut apparaître du point de vue de l'opérateur comme un gage de sécurité (le risque pour des personnes ayant peu de connaissances de compromettre le système étant réduit), empêche en même temps ces personnes de disposer de moyens de contrôle sur les fonctions simples de la passerelle résidentielle.

Cette méconnaissance est d'autant plus dommageable qu'une meilleure connaissance de la passerelle résidentielle permettrait assurément aux clients de mieux maîtriser le fonctionnement des services auxquels ils ont souscrit, minimisant ainsi la nécessité de faire appel au service d'assistance technique (« *hotline* » en anglais) en cas de dysfonctionnement constaté (par exemple, lorsque l'utilisateur d'une passerelle résidentielle ne peut plus accéder à au moins un service de télécommunications accessible en temps normal via la passerelle, ou lorsque le niveau de qualité d'au moins un service normalement accessible via la passerelle résidentielle est dégradé par rapport au niveau nominal). En effet, la plupart des fonctions basiques voire avancées sont directement gérables sur la passerelle résidentielle. Malheureusement, la majorité des clients grand-public ne dispose pas de connaissances suffisantes pour pouvoir gérer directement ces fonctions, ce qui entraîne un accroissement des appels au service d'assistance technique en cas de dysfonctionnement constaté, alors que certains de ces dysfonctionnements peuvent facilement être résolus en intervenant directement sur la passerelle résidentielle. Si l'on considère le coût de gestion des services d'assistance technique pour les opérateurs et fournisseurs de services, sans tenir compte de l'impact sur leur image (temps d'attente, coût des appels), il est important de mettre en place des solutions efficaces pour réduire le nombre de sollicitations auprès des services d'assistance technique des opérateurs et fournisseurs de services.

Les systèmes de restauration de service actuellement à disposition de la clientèle grand-public présentent notamment les limitations suivantes :
- la gestion des pannes impose au client d'appeler l'opérateur ou le fournisseur de services pour signaler une dégradation ou une indisponibilité du service ; de plus, si la passerelle est devenue incapable de se raccorder au réseau et si la ligne téléphonique du client est raccordée à la passerelle (cas de la Voix sur IP), cette ligne téléphonique devient indisponible, de sorte que le client ne peut pas l'utiliser pour appeler le service d'assistance technique ;
- les clients ne savent pas si l'opérateur a entrepris des actions pour résoudre des pannes impactant un service auquel ils ont droit ;
- les délais de résolution de pannes ne sont pas connus à l'avance ; et
- le service est indisponible pendant la période de résolution d'une panne par l'opérateur ou le fournisseur de services ; on notera à cet égard que certains opérateurs mettent actuellement en place une procédure de prêt d'équipement (par exemple, clé 3G) pour permettre à certains clients de continuer d'accéder à l'Internet ; cette approche commerciale a plusieurs inconvénients, par exemple le fait que le client doit se rendre en boutique, ou que le client n'accède pas forcément à l'intégralité des services auxquels il a souscrit : en effet, il ne dispose ainsi que des services résultant directement de l'accès à Internet ; en particulier, l'accès au service de télévision numérique (IPTV) n'est pas garanti. Des passerelles configurées pour détecter et/ou utiliser des chemins de connexion alternatifs en cas de non-disponibilité de l'interface normale ou primaire sont connues par exemple des demandes de brevet WO 2012004503 A1, US 2011066875 A1, FR 2962869 A1, WO 2010044714 A1 et WO 2007106843 A2.

La présente invention concerne donc une passerelle résidentielle selon la revendication 1, comprenant des moyens pour, suite à la détection d'une panne consistant en ce qu'au moins un service auquel ladite passerelle permet normalement d'accéder n'est plus accessible ou en ce que la qualité d'au moins un service auquel elle permet normalement d'accéder est dégradée :
- rechercher au moins une route IP, dite route de secours, vers un destinataire de données associées audit service, ladite route de secours passant
   - par une interface IP de ladite passerelle résidentielle, dite interface de secours, autre que la liaison entre la passerelle résidentielle et son équipement nominal de raccordement au réseau, et
   - par un autre dispositif communicant, dit dispositif diffusant, avec lequel la passerelle résidentielle est apte à établir une association réseau, et
- sélectionner une telle route de secours pour assurer la fourniture dudit service en utilisant ledit dispositif diffusant comme relais.
Ladite passerelle résidentielle est remarquable en ce qu'elle comprend en outre des moyens pour détecter la présence dudit dispositif diffusant en écoutant et en reconnaissant au moins un identifiant, dit identifiant de secours, diffusé par ledit dispositif diffusant.

Grâce à ces dispositions, la passerelle résidentielle peut continuer à rendre le, ou les services auxquels le client a droit, lorsque des évènements de différente nature ont pour effet de dégrader le niveau de qualité associé à un service auquel la passerelle résidentielle permet d'accéder, en faisant appel à des dispositifs communicants situés dans son voisinage. L'invention garantit ainsi la continuité d'un ou plusieurs services lors de pannes localisées dans les passerelles (y compris lorsque la panne affecte un organe principal de la passerelle) ou dans leur voisinage (notamment le réseau local domestique), voire lors de pannes survenues dans le réseau d'opérateur, en permettant à la passerelle en panne de rechercher des palliatifs de secours, et ce, *de manière autonome.* On notera que les systèmes de restauration de service actuellement à disposition de la clientèle grand-public ne comportent pas de moyens techniques destinés à garantir la continuité de service de manière autonome.

De plus, l'invention propose, avantageusement, des moyens de restauration de service n'impliquant pas la moindre intervention de la part du client. On peut bien sûr, à titre optionnel, tenir le client informé de l'évolution du traitement de la panne, tout en s'assurant que les procédures de détection et de résolution de pannes restent transparentes pour le client (l'invention peut en effet être mise en œuvre sans informer le client qu'une panne a été détectée, particulièrement quand une route de secours permettant de continuer à fournir le service concerné par la panne a été trouvée). Quoiqu'il en soit, l'invention améliore sensiblement l'expérience et la satisfaction des clients.

Selon des caractéristiques particulières, ladite passerelle résidentielle comprend des moyens pour, suite à ladite sélection d'au moins une route de secours, mettre à jour une table de routage comprenant ladite route de secours.

Grâce à ces dispositions, la passerelle résidentielle peut mettre en place dynamiquement des politiques de routage et d'acheminement pour diriger le trafic sortant vers une ou plusieurs routes de secours.

Selon des caractéristiques encore plus particulières, ladite table de routage comprend ladite route de secours avant ladite détection d'une panne.

Grâce à ces dispositions, la passerelle résidentielle peut, suite à la détection d'une panne, déterminer sans délai quelles sont les routes de secours disponibles.

Selon d'autres caractéristiques particulières, ladite passerelle comprend en outre des moyens pour :
- détecter ladite panne,
- rechercher au moins une route pouvant la connecter à au moins un Centre de Supervision des Passerelles, et
- si elle trouve une telle route et si elle détecte une panne, utiliser cette route pour envoyer au moins un rapport de panne à au moins un Centre de Supervision des Passerelles.

Ainsi, la présente invention propose d'embarquer dans une passerelle résidentielle des moyens techniques lui permettant de détecter les pannes et d'informer l'opérateur réseau ou le fournisseur de services sur ces pannes, et ce, *de manière autonome et proactive,* c'est-à-dire, notamment, *sans solliciter le client.* Les passerelles résidentielles sont ainsi intégrées dans la chaîne de supervision de l'opérateur réseau ou du fournisseur de services. On notera que les systèmes de restauration de service actuellement à disposition de la clientèle grand-public comportent, dans certaines réalisations (cf. par exemple la demande EP-2247088), des moyens automatiques :
- de détection de panne dans une passerelle résidentielle, et
- de notification de panne à l'utilisateur de cette passerelle,
mais ne comportent pas de moyens de notification automatique *au réseau.*

Pour ce faire, la passerelle peut envoyer un rapport de panne, par exemple :
- via une interface IP, ou
- en utilisant des techniques de transport L2 (pour « *Layer 2* » en anglais, signifiant « Couche 2 » du modèle OSI, dite « couche de liaison de données », c'est à dire sans les fonctions de transfert IP telles que l'acheminement et le routage IP) si la couche L2 de raccordement au réseau d'accès (i.e., le segment entre la passerelle et l'équipement de raccordement situé dans le réseau de l'opérateur) est encore opérationnelle.

Grâce à ces dispositions, on réduit le délai de rétablissement des services affectés par la panne, et l'on réduit le nombre d'appels aux services d'assistance technique (qui coûtent cher aux opérateurs).

On notera que la mise en œuvre de l'invention ne requiert pas de terminal téléphonique, ni d'interface aménagée sur la passerelle. Néanmoins, on peut, optionnellement, intégrer des terminaux externes pour des besoins tels que la notification de pannes, ou la transmission de messages spécifiques vers le réseau d'opérateur.

Selon un deuxième aspect, l'invention concerne également un système de restauration de service selon la revendication 6, comprenant :
- au moins une passerelle résidentielle telle que décrite succinctement ci-dessus, et
- au moins un autre dispositif communicant, dit dispositif diffusant, comprenant des moyens pour servir de relais à ladite passerelle résidentielle pour assurer la fourniture dudit service, ainsi que des moyens pour diffuser un identifiant reconnaissable par la passerelle résidentielle.

Les avantages offerts par ce système sont essentiellement les mêmes que ceux offerts par la passerelle décrite succinctement ci-dessus.

Selon des caractéristiques particulières, ledit identifiant de secours est caractéristique de la technologie de ladite interface de secours et/ou dudit service.

Grâce à ces dispositions, si la passerelle dispose d'une pluralité d'interfaces de secours, elle pourra utiliser des interfaces différentes, et donc des routes de secours différentes, selon la technologie de l'interface de secours utilisée et/ou du service dont il faut assurer la continuité.

Selon d'autres caractéristiques particulières, ledit dispositif diffusant comprend en outre des moyens pour cesser temporairement de diffuser ledit identifiant de secours lorsqu'il ne dispose pas d'une route IP opérationnelle pour fournir le, ou les service(s) associé(s) à cet identifiant de secours.

Grâce à ces dispositions, on évite les boucles de routage générées lorsqu'une passerelle résidentielle en panne choisit, pour relayer le trafic, un dispositif diffusant qui se trouve au même moment dans l'incapacité de servir de relais (par exemple, dans le cas où la panne affecte l'élément réseau qui termine les connexions au réseau à la fois de la passerelle et du dispositif diffusant).

Selon un troisième aspect, l'invention concerne un procédé de restauration de service selon la revendication 9, comprenant les étapes suivantes :
- détection d'une panne consistant en ce qu'au moins un service auquel une passerelle résidentielle permet normalement d'accéder n'est plus accessible ou en ce que la qualité d'au moins un service auquel une passerelle résidentielle permet normalement d'accéder est dégradée,
- recherche par ladite passerelle d'au moins une route IP, dite route de secours, vers un destinataire de données associées audit service, ladite route de secours passant
   - par une interface IP de ladite passerelle, dite interface de secours, autre que la liaison entre la passerelle et son équipement nominal de raccordement au réseau, et
   - par un autre dispositif communicant, dit dispositif diffusant, avec lequel la passerelle résidentielle est apte à établir une association réseau, et
- sélection par la passerelle résidentielle d'une telle route de secours pour assurer la fourniture dudit service en utilisant ledit dispositif diffusant comme relais.

Ledit procédé est remarquable en ce que la passerelle résidentielle a détecté la présence dudit dispositif diffusant en écoutant et en reconnaissant au moins un identifiant, dit identifiant de secours, diffusé par ledit dispositif diffusant.

Selon des caractéristiques particulières, suite à ladite sélection d'au moins une route de secours, ledit procédé comprend une étape de mise à jour d'une table de routage comprenant ladite route de secours.

Selon des caractéristiques encore plus particulières, ladite table de routage comprend ladite route de secours avant ladite détection d'une panne.

Selon d'autres caractéristiques particulières, ledit identifiant de secours est caractéristique de la technologie de ladite interface de secours et/ou dudit service.

Selon encore d'autres caractéristiques particulières, ladite détection de panne est réalisée par ladite passerelle, et la passerelle met alors en œuvre les étapes suivantes :
- recherche d'au moins une route pouvant la connecter à au moins un Centre de Supervision des Passerelles, et
- si elle trouve une telle route, utilisation de cette route pour envoyer au moins un rapport de panne à au moins un Centre de Supervision des Passerelles.

Selon des caractéristiques encore plus particulières, ladite passerelle résidentielle envoie ledit rapport de panne via une interface IP ou via la couche de liaison de données.

Les avantages offerts par ce procédé sont essentiellement les mêmes que ceux offerts par le système décrit succinctement ci-dessus.

On notera qu'il est possible de réaliser la passerelle et le dispositif diffusant selon l'invention dans le contexte d'instructions logicielles et/ou dans le contexte de circuits électroniques.

C'est pourquoi l'invention vise également un programme d'ordinateur téléchargeable depuis un réseau de communication et/ou stocké sur un support lisible par ordinateur et/ou exécutable par un microprocesseur selon les revendications 15 et 16. Ce programme d'ordinateur est remarquable en ce qu'il comprend des instructions pour l'exécution des étapes du procédé de restauration de service exposé succinctement ci-dessus, lorsqu'il est exécuté sur un ordinateur.

Les avantages offerts par ce programme d'ordinateur sont essentiellement les mêmes que ceux offerts par le procédé exposé succinctement ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1 représente l'envoi d'un rapport de panne par une passerelle vers un point de contact de service,
- la figure 2 illustre un exemple de messages échangés entre une passerelle ayant détecté une panne et un point de contact de service via une seule passerelle relais,
- la figure 3 illustre un exemple de messages échangés entre une passerelle ayant détecté une panne et un point de contact de service via une pluralité de passerelles relais,
- la figure 4 illustre le chemin emprunté par les données émises par une passerelle en panne à destination d'un correspondant connecté à Internet,
- la figure 5 illustre l'émission par un Centre de Supervision de Passerelles, suite à la réception d'un rapport de panne, d'un message contenant des instructions destinées à être appliquées par le réseau,
- la figure 6 représente l'utilisation, par une passerelle en panne, d'une pluralité de dispositifs relais soit concomitamment soit à tour de rôle,
- la figure 7 représente une configuration analogue à celle de la figure 6, mais dans laquelle on utilise en outre un concentrateur de connexions réseau,
- la figure 8 illustre un exemple de messages échangés entre une passerelle en panne et un correspondant via une chaîne de passerelles et un concentrateur, et
- la figure 9 illustre l'établissement d'une communication téléphonique, via une ou plusieurs passerelles relais, entre d'une part un téléphone VoIP connecté à une passerelle dont la panne affecte le service nominal de VoIP, et d'autre part un téléphone VoIP connecté au réseau.

Comme expliqué ci-dessus, l'invention vise à enrichir les capacités et l'intelligence d'une passerelle résidentielle afin d'assurer la continuité de service en cas de panne. Les passerelles doivent naturellement être configurées pour mettre en œuvre l'invention ; cette configuration peut être effectuée de manière statique ou dynamique, par exemple à l'aide de protocoles tels que DHCP (Dynamic Host Configuration Protocol) ou TR-69 (CPE WAN Management Protocol).

Pour résoudre certains cas de pannes où les clients appellent le service d'assistance technique inutilement, on peut utiliser, si son accès est opérationnel, une interface réseau qui ne fait pas partie des interfaces décrites dans l'offre commerciale souscrite par ce client. Pour illustrer ce cas, considérons une passerelle équipée à la fois d'une interface optique (fibre) et d'une interface électrique (ADSL). Si le client connecte sa passerelle en utilisant le port optique au lieu de la connecter au port ADSL (parce qu'il n'a pas fait attention au « code couleur » indiqué dans la notice d'installation, ou parce qu'une autre personne a modifié le raccordement), le client ne pourra pas accéder à ses services ; en d'autres termes, ce client ADSL ne pourra pas accéder au service de connectivité s'il se connecte via le port optique. On pourra prévoir que, dans un tel cas, un message soit affiché immédiatement au client via une interface dédiée pour lui signaler que, même si le port réseau connecté est actif (diode LED clignotante pour signifier que la ligne est opérationnelle du point de vue du raccordement physique), la connectivité ne peut pas être fournie car son offre de service n'est pas compatible (accès au service refusé), et une invitation à utiliser le «bon» port réseau sera immédiatement proposée par la passerelle. L'émission d'un tel message suppose que la passerelle dispose des informations requises sur l'offre commerciale souscrite par le client. A noter que toutes les informations relatives à l'incompatibilité entre une offre commerciale et le choix de raccordement physique de la passerelle peuvent être détectées (voire collectées) par le réseau, afin que ce dernier soit préparé à traiter un appel émis par un client qui n'a pas pris en compte la proposition de résolution locale.

On va décrire à présent, à titre d'exemple, un mode de réalisation du procédé de restauration de service selon l'invention.

Selon une première étape, une entité réseau détecte une panne concernant une passerelle résidentielle CPE_1 connectée au réseau. On notera que plusieurs services peuvent être simultanément défaillants. Notamment, la panne d'un service aura pour conséquence l'indisponibilité de tous les services reposant sur le service défaillant : par exemple, l'indisponibilité du service d'accès à Internet peut empêcher la communication de messages électroniques et l'établissement de communications téléphoniques. Cette dépendance intrinsèque entre services (ainsi que d'autres logiques de service) peut être connue de, ou détectée par, la passerelle résidentielle.

Selon une première variante, c'est la passerelle CPE_1 elle-même qui détecte cette panne. A cette fin, la passerelle CPE_1 embarque de préférence les deux modules suivants.

Un premier module enregistre les modifications récentes dans les configurations et les états des interfaces physiques, ainsi que les décisions prises localement par la passerelle de façon automatique. Ces décisions prises localement sont destinées à résoudre certains problèmes sans que le réseau ne soit sollicité. Le premier module enregistre également les mises à jour logicielles et les opérations d'activation/désactivation de services tels que DNS (Domain Name System), UPnP (Universal Plug and Play), pare-feu, PCP (Port Control Protocol), ou SAMBA (Server Message Block).

Ces enregistrements sont horodatés. La passerelle active de préférence un mécanisme de synchronisation de son horloge interne, par exemple en utilisant les ressources du protocole NTP (Network Time Protocol). Un fichier destiné à consigner les opérations de diagnostic et de dépannage est maintenu par la passerelle. Ce fichier peut être consulté à distance par l'opérateur, ou être récupéré par une plateforme de gestion de pannes. Il peut être annexé à toute réclamation émise par le client. A noter que les données consignées dans ce ficher ne doivent pas porter atteinte à la vie privée ni divulguer des informations personnelles. Seules les informations nécessaires à la fourniture du ou des services sont traitées. Ce module continue de fonctionner même pendant la panne.

Un deuxième module a la charge de vérifier si les services souscrits par le client sont pleinement accessibles (c'est-à-dire accessible avec la Qualité de Service nominale). Ce module concerne aussi les services domestiques embarqués dans la passerelle, comme par exemple un serveur d'impression ou un serveur de partage de fichiers. Le référentiel utilisé pour caractériser un niveau nominal de fourniture d'un service peut être calculé localement par la passerelle sur la base d'heuristiques (par exemple, profilage local) ou fourni par l'opérateur comme une information d'entrée d'un applicatif dédié. Ces informations sont spécifiques à chaque service, aux technologies sous-jacentes utilisées pour la fourniture d'un service, et comportent également d'autres paramètres.

Ce deuxième module est également responsable de la détection de toute perte de connectivité dans le réseau local (par exemple, un problème d'attachement d'un ordinateur portable) ou dans le réseau WAN (initiales des mots anglais « *Wide Area Network* » signifiant « Réseau Etendu »). Ce module permet de distinguer si une panne provient du réseau local ou du réseau WAN. Particulièrement, le statut de la connectivité WAN doit être surveillé et contrôlé régulièrement. Ce module effectue des tests locaux, par exemple, de manière régulière ou lorsque certains événements surviennent. Les résultats de ces tests sont enregistrés localement afin de permettre d'évaluer toute déviance dans le comportement de la passerelle. Les résultats sont aussi horodatés afin de faciliter la corrélation des opérations de configuration, effectuées par le client ou demandées par l'opérateur, avec les pannes observées.

La passerelle comprend en outre des moyens pour purger les données utilisées pour la supervision autonome de service. Ces moyens peuvent être automatisés (par exemple, changement d'identifiant de connexion de client, taille mémoire critique dépassant un certain seuil, fuite mémoire, et ainsi de suite) ou invoquées à la demande (soit par l'opérateur de réseau, soit par le client). Aussi, dans le cadre de la gestion autonome de la passerelle, certains ajustements peuvent être effectués localement, tels que désactiver un processus défaillant. Cependant, des précautions peuvent être prises pour minimiser les risques de dysfonctionnement des procédures de gestion autonome, par exemple en leur associant une priorité élevée. D'autres précautions peuvent être prises pour assurer la fiabilité du système de contrôle autonome. Ces précautions seront généralement spécifiques à chaque opérateur.

Selon une deuxième variante de ladite première étape, la panne affectant la passerelle CPE_1 est détectée par une entité autre que la passerelle CPE_1 elle-même, cette entité étant située dans l'infrastructure d'accès du réseau. Par exemple, une panne causée par la rupture du lien raccordant la passerelle au réseau peut être détectée par un DSLAM (initiales des mots anglais « *Digital Subscriber Line Access Multiplexer* » signifiant « Multiplexeur d'Accès de Lignes d'Abonnés Numériques ») ou par un BRAS (initiales des mots anglais *« Broadband Remote Access Server* » signifiant « Serveur Large Bande pour l'Accès à Distance »). Par ailleurs, cette détection peut être effectuée par un protocole de routage dynamique, ou par un protocole de détection de défaillance tel que le protocole BFD (Bidirectional Forwarding Detection).

Selon une deuxième étape du présent mode de réalisation, l'entité réseau qui a détecté la panne envoie au moins un rapport de panne à au moins une plateforme de supervision notée CSC (initiales des mots anglais «*CPE Supervision Center*» signifiant « Centre de Supervision de Passerelles ») située en amont dans le réseau auquel la passerelle est connectée, afin de notifier le réseau de cette panne, et de lancer les opérations requises pour déterminer l'origine de la panne et pour la réparer.

On notera que :
- plusieurs CSC peuvent être déployés dans un réseau d'opérateur ou de fournisseur de services ; dans ce cas, un, plusieurs ou l'ensemble de ces CSC peuvent recevoir un ou plusieurs rapports de panne ;
- même si l'entité émettrice ne connaît qu'un seul CSC, elle peut lui envoyer le rapport de panne plusieurs fois (par exemple, trois fois) pour s'assurer que le rapport sera effectivement reçu.

Optionnellement, sur réception du rapport de panne, un CSC peut émettre un ticket de panne ; de plus, un numéro de panne est communiqué à la passerelle. Ce numéro peut être aussi communiqué au client localement (par exemple sur une interface de configuration de la passerelle ou d'un téléviseur), ou par SMS (initiales des mots anglais « *Simple Message Service* » signifiant « Service de Message Simple ») ou SMTP (initiales des mots anglais « *Simple Mail Transfer Protocol* » signifiant « Protocole Simple de Transfert de Courrier »). Un message peut être affiché en utilisant un écran de la passerelle, ce message indiquant au client que des dispositions ont été prises, et l'invitant à ne pas appeler le service d'assistance technique. Le client est de préférence informé régulièrement de l'évolution du traitement de la panne. Un rapport de panne peut être mis à disposition du client une fois la panne résolue. Ce rapport peut être envoyé au client (mail, SMS) ou être consultable en ligne. Quand la mise en œuvre de l'invention assure un niveau de service similaire au niveau nominal, la procédure peut s'affranchir de la phase de notification : il n'est en effet nul besoin de polluer le client avec des informations non pertinentes, puisque le service fourni conserve son niveau de qualité ; on rend ainsi la détection et la résolution de panne aussi transparentes que possible pour le client.

Dans le cadre de la première variante décrite ci-dessus, la passerelle comprend également des moyens pour rechercher au moins une route pouvant la connecter à au moins un CSC, suite ou, de préférence, préalablement, à la détection d'une panne.

Si la panne affecte la couche IP de la liaison entre la passerelle et son équipement de raccordement au réseau, la passerelle pourra cependant envoyer un rapport de panne en utilisant un tramage L2 (par exemple, en transmettant des paquets Ethernet), à moins que la couche L2 ne soit elle aussi en panne. Si en outre la passerelle ne dispose d'aucune connectivité IP, il faudra attendre que les services techniques de l'opérateur ou du fournisseur de services résolvent la panne ; dans ce cas, il est préférable transmettre au client (par exemple selon l'une des modalités décrites ci-dessus) l'information selon laquelle le réseau a été notifié de la panne.

En revanche, si la passerelle dispose d'au moins une interface IP (que l'on appellera « interface de secours ») autre que la liaison entre la passerelle et son équipement nominal de raccordement au réseau, la passerelle pourra optionnellement envoyer le rapport de panne via cette interface de secours, au lieu d'utiliser un tramage L2.

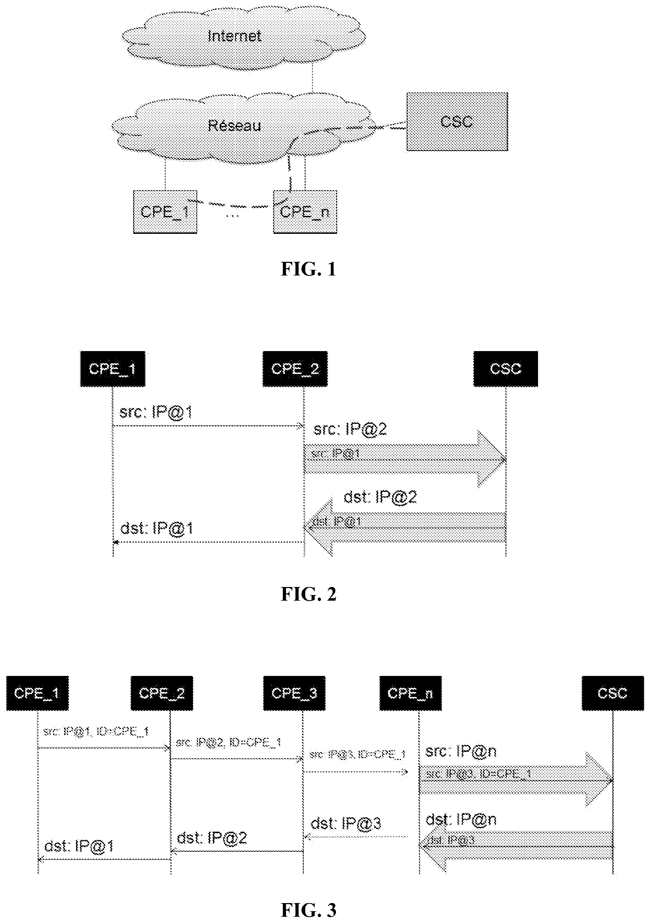

Sur la **figure 1****,** à titre d'exemple, un rapport de panne, émis par une passerelle CPE_1 ayant détecté une panne, est acheminé via une ou plusieurs passerelles CPE_2, CPE_3, ..., CPE_n jouant le rôle de relais.

La **figure 2** illustre un exemple de messages échangés entre une passerelle CPE_1 ayant détecté une panne et un CSC via une unique passerelle relais CPE_2. La **figure 3** illustre un exemple de messages échangés entre une passerelle ayant détecté une panne CPE_1 et un CSC via une pluralité de passerelles relais CPE_2, CPE_3, ..., CPE_n. Les tables d'acheminement des passerelles relais peuvent, en plus de l'adresse IP source utilisée dans lesdits messages, prendre en compte un identifiant spécifique à chaque passerelle, tel qu'un numéro de série ou une adresse MAC (initiales des mots anglais « *Medium Access Control* » signifiant « Contrôle d'Accès au Médium »).

En réponse à la réception et à l'analyse d'un rapport de panne, un CSC peut émettre des instructions destinées à la passerelle en panne. En particulier, le CSC ou le réseau peuvent envoyer à la passerelle l'instruction de laisser le réseau se charger des opérations aptes à assurer la continuité de service. Si un CSC a reçu le rapport de panne via plusieurs chemins, il peut choisir celui ou ceux parmi ces chemins qu'il utilisera pour transmettre ces instructions à la passerelle.

Selon une troisième étape du présent mode de réalisation, la passerelle en panne assure la continuité de service de manière autonome. On suppose évidemment ici que la passerelle n'a pas reçu de contrordre du réseau, selon l'option mentionnée ci-dessus ; de plus, on suppose que la passerelle en panne dispose d'au moins une interface de secours, telle que définie ci-dessus.

Pour pouvoir assurer la continuité de service de manière autonome, la passerelle en panne doit être capable :
- de se comporter comme un terminal-client, c'est-à-dire qu'elle doit être capable d'établir une association réseau avec un autre dispositif, que l'on appellera « dispositif de secours », et
- de trouver une route IP passant par une de ses interfaces de secours et par un dispositif de secours, et aboutissant à un destinataire concerné par un service à restaurer.

Dans le cadre de la présente invention, on entend par « route IP » une route calculée, sélectionnée et installée par une passerelle en panne pour acheminer du trafic IP vers une destination donnée.

On notera à cet égard que :
- une route IP utilisée par la passerelle pour l'envoi d'un rapport de panne vers un CSC n'est pas nécessairement une route de secours utilisée pour assurer la restauration d'un service ;
- si la passerelle dispose d'une pluralité d'interfaces de secours, elle peut utiliser des interfaces différentes pour restaurer des services différents ; autrement dit, les routes de secours qui contribuent à garantir la continuité de service peuvent être spécifiques à chaque service ; la passerelle doit donc de préférence être capable de maintenir des tables de routage par service, et de mettre en œuvre des mécanismes pour associer une route à un service, c'est-à-dire de mettre en place dynamiquement des politiques de routage et d'acheminement pour diriger le trafic sortant vers une ou plusieurs routes de secours.

On notera également que l'invention ne fait aucune hypothèse quant à la nature des dispositifs de secours. Notamment :
- les dispositifs de secours peuvent être par exemple des passerelles, des terminaux mobiles, ou des points d'accès WLAN ;
- les dispositifs de secours peuvent être opérés par le même opérateur, ou par des opérateurs différents de celui qui opère la ligne principale de la passerelle en panne ; et
- les dispositifs de secours peuvent utiliser des technologies de connectivité de différente nature (telles que WiFi, WiMAX, GSM, LTE, 5G, Ethernet, ou Fibre) ; par exemple, pour restaurer un service de télévision numérique, on utilisera de préférence, comme dispositif de secours, une autre passerelle résidentielle (par opposition, par exemple, à un téléphone portable), car les signaux de télévision numérique sont généralement diffusés selon le mode de transmission multicast vers les passerelles résidentielles.

Quand donc une passerelle subit une panne affectant le service nominal de connectivité IP, elle établit une association automatique de session avec un dispositif de secours situé à proximité. Ce dispositif de secours va jouer le rôle de relais. La table de routage IP de la passerelle est alors mise à jour en conséquence. On peut à cet effet, optionnellement, mettre en place dans la passerelle, avant même la détection d'une panne, une table de routage de secours par service, afin que la passerelle puisse en disposer sans délai suite à la détection d'une panne ; dans ce cas, la structure des tables de routage peut être configurée pour indiquer le type d'une route, à savoir « principale » ou « de secours ».

Des accords d'interconnexion (pour cette nouvelle forme « d'itinérance », que l'on appellera « itinérance CPE ») peuvent être requis pour permettre l'utilisation des dispositifs de secours (sans que les clients aient nécessairement connaissance de ces accords) ; les accords d'itinérance CPE permettent à un opérateur d'assurer une couverture optimale pour pouvoir secourir certaines passerelles de ses clients en cas de panne ; ce faisant, la mutualisation de la procédure de secours entre tous les opérateurs ou un groupe d'opérateurs permet d'optimiser les coûts d'intégration, et aussi d'améliorer l'efficacité de la procédure.

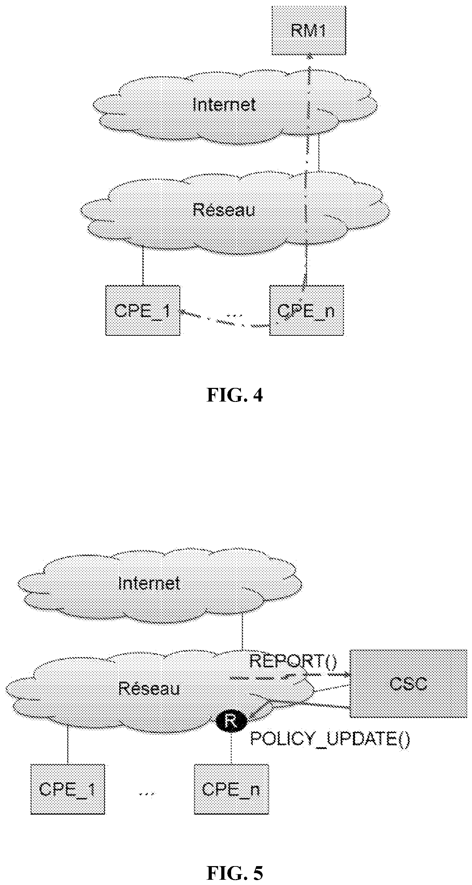

A titre d'exemple, sur la **figure 4**, les données émises par une passerelle CPE_1 en panne sont acheminées vers un correspondant RM1 (RM sont les initiales des mots anglais « *Remote Machine* » signifiant « Machine Distante ») connecté à Internet, via une succession de dispositifs de secours constitués ici par des passerelles CPE_2, CPE_3, ..., CPE_n.

Le trafic envoyé via une route de secours peut être rejeté par le réseau de l'opérateur sur échec d'identification de la passerelle ou si le client n'a pas souscrit au service associé à ce trafic. En effet, il faut empêcher qu'un utilisateur ne puisse utiliser les ressources du système de continuité de service selon l'invention pour accéder à un service, alors qu'il n'y a pas droit et ne peut donc y avoir accès via sa ligne principale.

Afin d'éviter qu'un utilisateur malveillant n'intercepte le trafic d'autres clients en simulant un dispositif de secours, on prévoira de préférence une procédure d'authentification mutuelle entre la passerelle et le dispositif de secours choisi pour relayer le rapport de panne et/ou assurer la continuité de service (ce relais est appelé « dispositif relais sollicité ») ; cette authentification mutuelle permettra d'éviter que la passerelle en panne ne relaie le trafic vers un dispositif « pirate », c'est-à-dire non habilité à relayer les données émises par la passerelle et de nature à provoquer un déni de service. De plus, afin de préserver la confidentialité des échanges, tout le trafic envoyé vers un dispositif relais sollicité est de préférence chiffré.

Lors de la phase d'attachement, préventivement ou en cas de détection d'un conflit d'adresse, le dispositif relais sollicité alloue à la passerelle en panne une adresse IPv4, ou une adresse IPv6, ou les deux, un pool d'adresses IPv4 et/ou IPv6 ayant été réservé à cet usage.

L'identifiant (tel qu'un numéro de série ou une adresse MAC) de la passerelle en panne n'est pas altéré lors de l'acheminement de ses paquets vers le dispositif relais sollicité. Chaque passerelle intermédiaire garde en mémoire un état d'un paquet relayé vers d'autres passerelles voisines ou vers le CSC. Cette mémorisation peut être mise en œuvre pour l'envoi du rapport de panne vers le CSC et la réception d'instructions depuis le réseau (figure 1), et/ou pour garantir la continuité de service en cas de panne (figure 4) grâce à la mise en place de routes symétriques permettant de relayer le trafic retour vers la passerelle en panne. Les exemples de messages illustrés sur les figures 2 et 3, décrites ci-dessus, offrent plus de détails concernant le traitement des paquets par les passerelles intermédiaires ; en particulier, en référence à ces deux exemples, une opération NAT est effectuée par chaque passerelle relais intermédiaire sans modifier l'identifiant de la passerelle en panne.

Afin de ne pas perturber le fonctionnement des dispositifs de secours servant de relais à une passerelle en panne, on peut prévoir l'activation automatique de règles de conditionnement de trafic ; ces règles seront désactivées une fois le service nominal redevenu opérationnel. Dans le même but, le CSC peut, comme illustré par la **figure 5****,** mettre à jour les règles de conditionnement de trafic (« *Policing*/*Shaping* » en anglais), telles qu'appliquées, de préférence, par le nœud de raccordement (désigné par « R » sur la figure) au réseau d'accès (ce nœud pouvant être un DSLAM, par exemple) de la chaîne de dispositifs de secours, pour pouvoir absorber le trafic de la passerelle en panne. Le CSC peut par exemple émettre un message (désigné par POLICY_UPDATE() sur la figure) ayant pour effet de modifier les règles de contrôle d'admission, les seuils de ressources montantes/descendantes, les services autorisés, et ainsi de suite, après avoir reçu le rapport de panne (désigné par REPORT() sur la figure).

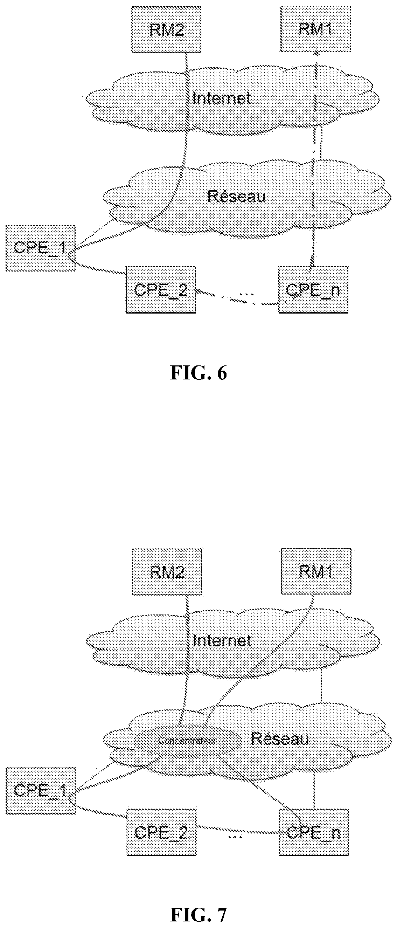

Afin de ne pas dégrader le niveau de service d'un dispositif de secours servant à lui tout seul de relais à une passerelle en panne, cette passerelle peut solliciter *plusieurs* dispositifs de secours. Par exemple, la passerelle en panne pourrait utiliser plusieurs passerelles relais, mais en répartissant concomitamment le trafic entre elles, ou en utilisant chaque passerelle relais à tour de rôle pendant un temps donné. Plusieurs dispositifs de secours peuvent être ainsi sollicités pour un même service ou pour des services distincts. A titre d'exemple, la **figure 6** représente une passerelle CPE_2 en panne, et qui utilise, comme dispositifs de secours :
- une passerelle CPE_1 pour communiquer avec un correspondant RM2, et
- une chaîne de passerelles CPE_3, ..., CPE_n pour communiquer avec un correspondant RM1.

Afin que les données émises par une passerelle en panne parviennent à ses correspondants dans des paquets présentant la même adresse source (appelée « adresse externe ») indépendamment du ou des dispositifs relais sollicité(s), on peut, comme illustré par la **figure 7****,** faire appel à un concentrateur de connexions réseau (connu en soi) ; on rappelle à cet égard que l'on appelle « concentrateur de connexions réseau » toute fonction réseau permettant d'agréger les connexions exploitant les différents chemins susceptibles d'être utilisés par un dispositif quelconque pour établir une communication avec un quelconque dispositif distant. On peut ainsi, en outre, isoler le trafic issu de la passerelle en panne de celui du dispositif relais et fournir des fonctions d'interception légale. Dans ce mode de réalisation, le trafic est encapsulé vers ledit concentrateur ; l'identifiant de la passerelle en panne est inséré dans l'entête du paquet encapsulant les données émises par cette passerelle.

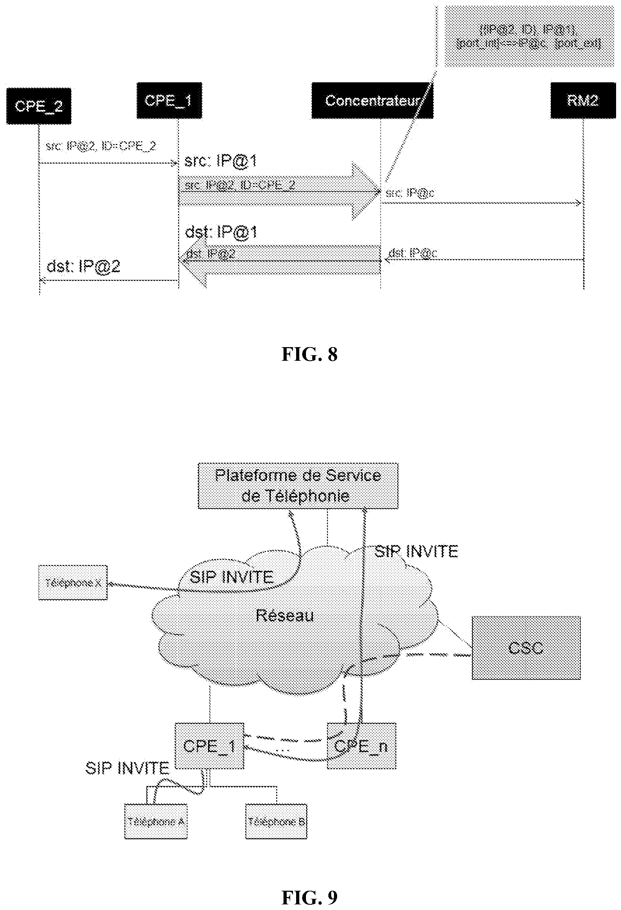

La **figure 8** illustre un exemple de messages échangés entre une passerelle en panne et un correspondant RM1 via une chaîne de passerelles CPE_3, ..., CPE_n et un concentrateur.

Afin de compenser la contribution d'un dispositif de secours en mode de secours (par exemple, pour compenser l'usage qui est fait de ce dispositif par un utilisateur tiers, y compris la consommation électrique due à un usage non personnel), l'opérateur peut prévoir un geste commercial en faveur du propriétaire du dispositif de secours. De plus, les utilisateurs se fient en général aux diodes LED des passerelles pour détecter qu'un trafic est émis/reçu par une passerelle. C'est pourquoi on peut utiliser une diode LED dédiée pour rassurer le propriétaire d'une passerelle utilisée comme relais que le trafic échangé est légitime. En variante, des diodes LED peuvent signaler la présence ou l'absence de trafic relayé : par exemple, le code couleur « vert » pourrait être utilisé pour indiquer que la passerelle ne traite que le trafic local du client, tandis que le code couleur « orange » pourrait être utilisé pour indiquer que la passerelle traite, en plus du trafic local du client, le trafic d'un autre client au titre de la procédure de secours. Les compteurs contrôlant les interfaces doivent aussi prendre en compte cette distinction entre le trafic local et le trafic relayé caractéristique d'un autre utilisateur/client.

L'exploitation d'une connectivité IP en dépit de la panne affectant le service nominal de connectivité IP peut en pratique se présenter de manières très variées.

On connaît ainsi, dans l'état de l'art, des systèmes de restauration de services où la passerelle dispose, dans son voisinage, d'au moins une route WAN de secours permanente, par exemple du fait que la passerelle est connectée à une station radio LTE (Long Term Evolution), ou du fait que la passerelle est installée dans le site d'une entreprise qui prévoit systématiquement un double raccordement au(x) réseau(x) reposant sur l'utilisation de deux chemins distincts. Ces systèmes connus ont pour inconvénient qu'ils nécessitent la présence permanente (et l'entretien) d'un équipement de secours de taille importante, alors que les occurrences de panne sont rares (en principe).

La présente invention résout ce problème en proposant que, suite à la détection d'une panne, une passerelle sélectionne *dynamiquement* une autre route IP que la route nominale de raccordement au réseau, cette autre route IP (dite « route de secours ») passant par un dispositif de secours apte à servir de relais ; la passerelle peut par exemple utiliser comme relais le téléphone portable d'un client, connecté à une interface WLAN, ou Bluetooth, ou NFC (Near Field Communication) de la passerelle et qui relaiera le trafic de données via une connexion GSM (Global System for Mobile Communications) ou LTE. De plus, la, ou les route(s) IP de secours peu(ven)t être installée(s) dans des tables de routage de manière proactive afin d'anticiper toute panne ou dégradation de service.

Pour qu'une passerelle puisse faire, ainsi, appel dynamiquement à un ou plusieurs relais en cas de panne, l'invention propose l'utilisation d'un ou plusieurs identifiants dédiés, que l'on appellera « identifiants de secours », et qui ont été détectés (« écoutés ») par la passerelle avant et/ou après la détection de la panne. Les identifiants de secours sont configurés dans un ensemble particulier de dispositifs de secours appelés « dispositifs diffusants », qui peuvent être, par exemple, des passerelles résidentielles et/ou des points d'accès WLAN et/ou des terminaux mobiles de clients ; chaque identifiant de secours est diffusé, de préférence périodiquement, par au moins un dispositif diffusant. Un identifiant de secours donné peut être spécifique à chaque opérateur réseau, ou être commun à un groupe d'opérateurs.

Naturellement, le format de chaque identifiant de secours est caractéristique de la technologie des interfaces de secours associées. On peut donc, dans un ensemble donné de dispositifs diffusants, prévoir *plusieurs* identifiants de secours distincts si la passerelle dispose d'interfaces de secours de technologies distinctes.

On notera que l'identifiant de secours selon l'invention ne doit pas être confondu avec le « SSID » utilisé classiquement par les points d'accès WLAN pour l'usage local ; on rappelle à cet égard que le « SSID » (initiales des mots anglais « *Service Set Identifier*» signifiant « Identifiant d'Ensemble de Service ») est le nom d'un réseau « Wi-Fi » selon la norme IEEE 802.11, et qu'il est destiné à être « écouté » par les terminaux pour leur permettre (s'ils y sont autorisés) de se connecter à un point d'accès « Wi-Fi » diffusant un certain SSID.

Un risque associé au système selon l'invention est celui des boucles de routage qui pourraient être générées si une passerelle en panne sollicitait, pour relayer le trafic, un dispositif diffusant qui se trouve au même moment dans l'incapacité de servir de relais (par exemple, dans le cas où la panne affecte l'élément réseau qui termine les connexions au réseau à la fois de la passerelle et du dispositif diffusant). Pour éviter ce risque, on prévoira de préférence que :
- la passerelle installe préventivement plusieurs routes IP qui permettent de joindre un même fournisseur de service avec succès ; et/ou
- tout dispositif diffusant qui détecte une panne sur son interface WAN principale cesse de diffuser ledit identifiant de secours temporairement, par exemple aussi longtemps qu'il n'a pas découvert un relais apte à relayer le rapport de panne vers le CSC, ou n'a pas installé de route(s) de secours pour son propre bénéfice.

La fin de la panne peut être détectée directement par la passerelle, ou être notifiée à la passerelle par un CSC ou le réseau. De préférence, la passerelle comprend des moyens pour revenir au routage nominal quand la panne a été résolue, de sorte que la panne et sa résolution sont complètement transparentes pour le client. Le basculement du trafic vers le raccordement principal ainsi rétabli peut alors se faire immédiatement ou de manière différée, en vertu d'une logique qui peut être spécifique à chaque service et connue de la passerelle. Par exemple, on peut prévoir que seuls les *nouveaux* appels téléphoniques utiliseront la ligne principale, alors que les appels *en cours* continuent d'utiliser une route de secours.

On va, pour terminer, décrire l'application de l'invention à deux types de services très répandus.

Dans le cas d'un client ayant souscrit à une offre de Voix sur IP (VoIP), la passerelle embarque une fonction mandataire, par exemple Proxy SIP (initiales des mots anglais « Session Initiation Protocol » signifiant « Protocole d'Initialisation de Session »), destinée à relayer les messages de signalisation (SIP INVITE) envoyés par un terminal VoIP vers une plateforme de service de téléphonie, par exemple un SBC (Session Border Controller) ou un P-CSCF (Proxy-Call Session Control Function) ; ce sont ces messages de signalisation qui conditionnent l'accès au service VoIP, c'est-à-dire qui permettent de s'enregistrer auprès du service, puis d'établir et de recevoir des appels. La **figure 9** illustre l'établissement d'une communication téléphonique, via une ou plusieurs passerelles relais, entre un téléphone VoIP «A», connecté à une passerelle CPE_1, et un téléphone VoIP «X», connecté au réseau. A noter que les identifiants de la ligne téléphonique, même en sollicitant une passerelle relais, restent ceux de la ligne téléphonique en panne.

Dans le cas d'un client ayant souscrit à une offre de télévision sur IP (offre IPTV), ou de Vidéo à la Demande (« *Video on Demand*»*,* ou VoD, en anglais), la passerelle embarque une fonction mandataire, par exemple proxy IGMP (Internet Group Management Protocol) ou MLD (Multicast Listener Discovery), destinée à relayer les messages de souscription et de désabonnement à un service de diffusion de contenus IPTV (diffusion de programmes télévisés, notamment) envoyés par le récepteur/décodeur (« *Set Top Box*»*,* ou STB en anglais) connecté à la passerelle vers l'équipement d'accès en charge de traiter ces messages de souscription/désabonnement ; ce sont ces messages de signalisation qui conditionnent l'accès au contenu IPTV désiré par le client, c'est-à-dire le programme télévisé auquel le client souhaite accéder. Le trafic correspondant est acheminé le long d'arbres de distribution calculés et établis selon le mode de transmission multicast IP. Chaque terminaison de l'arbre est située dans un équipement d'accès qui raccorde différents clients intéressés à recevoir le contenu. Lorsqu'une panne survient sur la ligne de raccordement du client au réseau, le trafic de signalisation est redirigé vers un dispositif relais qui embarque la fonction mandataire idoine : cela suppose que la passerelle en panne a la capacité de découvrir dynamiquement les fonctions assurées par les dispositifs relais que cette passerelle est susceptible de solliciter ; des protocoles classiques tels que DHCP ou SLP peuvent être utilisés à cette fin. Aussi, pour réduire le temps de repli, on peut mettre en place un identifiant de secours spécifique par service ; cet identifiant de secours spécifique permet d'initialiser une procédure d'association réseau limitée aux dispositifs relais en mesure de relayer le trafic dudit service.

La fonction mandataire de la passerelle relais se charge alors de relayer les nouvelles demandes de souscription ou de désabonnement à un service de diffusion de contenus IPTV émises par le ou les récepteur(s) IPTV connectés à la passerelle en panne. Ces demandes seront traitées par l'équipement d'accès auquel la passerelle relais est connectée. Une fois la demande de souscription traitée, le trafic caractéristique du contenu IPTV demandé est acheminé par l'équipement d'accès vers le dispositif relais, lequel le transmet à la passerelle en panne, qui se charge enfin de l'acheminer au récepteur IPTV.

Dans ce contexte, le trafic est inévitablement diffusé sur le réseau local auquel la passerelle relais est connectée (car la passerelle se comporte comme un équipement L2 sur le réseau local), en plus d'être acheminé vers la passerelle en panne. Pour éviter de polluer le réseau local auquel la passerelle relais est connectée par du trafic de diffusion IPTV non désiré, la passerelle relais peut utiliser des moyens d'analyse et de filtrage du trafic destiné à une adresse de groupe multicast IP.

L'invention peut être mise en œuvre au sein des nœuds, par exemple des passerelles domestiques ou d'entreprise, ou des dispositifs diffusants, de réseaux de communication, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre du procédé de restauration de service selon l'invention.

En effet, l'invention vise aussi un programme d'ordinateur téléchargeable depuis un réseau de communication comprenant des instructions pour l'exécution des étapes du procédé de restauration de service selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de restauration de service selon l'invention.

## Revendications

1. Passerelle résidentielle, comprenant des moyens pour, suite à la détection d'une panne consistant en ce qu'au moins un service auquel ladite passerelle permet normalement d'accéder n'est plus accessible ou en ce que la qualité d'au moins un service auquel elle permet normalement d'accéder est dégradée :
- rechercher au moins une route IP, dite route de secours, vers un destinataire de données associées audit service, ladite route de secours passant
• par une interface IP de ladite passerelle résidentielle, dite interface de secours, autre que la liaison entre la passerelle résidentielle et son équipement nominal de raccordement au réseau, et
• par un autre dispositif communicant, dit dispositif de secours, avec lequel la passerelle résidentielle est apte à établir une association réseau, et
- sélectionner une telle route de secours pour assurer la fourniture dudit service en utilisant ledit dispositif diffusant comme relais,
**caractérisée en ce que** ledit dispositif de secours appartient à un ensemble de dispositifs de secours dans lesquels des identifiants dédiés dits de secours, reconnaissables par ladite passerelle résidentielle, ont été configurés, ces dispositifs de secours diffusant lesdits identifiants dédiés de secours avec lesquels ils ont été configurés, et **en ce que** ladite passerelle résidentielle comprend en outre des moyens pour détecter la présence dudit dispositif de secours en écoutant et en reconnaissant au moins un dit identifiant dédié de secours, diffusé par ledit dispositif de secours.

2. Passerelle résidentielle selon la revendication 1, **caractérisée en ce qu'**elle comprend des moyens pour, suite à ladite sélection d'au moins une route de secours, mettre à jour une table de routage comprenant ladite route de secours.

3. Passerelle résidentielle selon la revendication 2, **caractérisée** en ce ladite table de routage comprend ladite route de secours avant ladite détection d'une panne.

4. Passerelle résidentielle selon l'une quelconque des revendications 1 à 3, **caractérisée en ce qu'**elle comprend en outre des moyens pour :
- détecter ladite panne,
- rechercher au moins une route pouvant la connecter à au moins un Centre de Supervision des Passerelles, et
- si elle trouve une telle route et si elle détecte une panne, utiliser cette route pour envoyer au moins un rapport de panne à au moins un Centre de Supervision des Passerelles.

5. Passerelle résidentielle selon la revendication 4, **caractérisée en ce qu'**elle comprend des moyens pour envoyer ledit rapport de panne via une interface IP ou via la couche de liaison de données.

6. Système de restauration de service, comprenant :
- au moins une passerelle résidentielle selon l'une quelconque des revendications 1 à 5, et
- au moins un autre dispositif communicant, dit dispositif de secours, comprenant des moyens pour servir de relais à ladite passerelle résidentielle pour assurer la fourniture dudit service, ainsi que des moyens pour diffuser un identifiant dédié de secours reconnaissable par la passerelle résidentielle et avec lequel il a été configuré.

7. Système de restauration de service selon la revendication 6, **caractérisé en ce que** ledit identifiant de secours est caractéristique de la technologie de ladite interface de secours et/ou dudit service.

8. Système de restauration de service selon la revendication 6 ou la revendication 7, **caractérisé en ce que** ledit dispositif de secours comprend en outre des moyens pour cesser temporairement de diffuser ledit identifiant dédié de secours lorsqu'il ne dispose pas d'une route IP opérationnelle pour fournir le, ou les service(s) associé(s) à cet identifiant dédié de secours.

9. Procédé de restauration de service, comprenant les étapes suivantes :
- détection d'une panne consistant en ce qu'au moins un service auquel une passerelle résidentielle permet normalement d'accéder n'est plus accessible ou en ce que la qualité d'au moins un service auquel une passerelle résidentielle permet normalement d'accéder est dégradée,
- recherche par ladite passerelle d'au moins une route IP, dite route de secours, vers un destinataire de données associées audit service, ladite route de secours passant
• par une interface IP de ladite passerelle, dite interface de secours, autre que la liaison entre la passerelle et son équipement nominal de raccordement au réseau, et
- par un autre dispositif communicant, dit dispositif de secours, avec lequel la passerelle résidentielle est apte à établir une association réseau, et
- sélection par la passerelle résidentielle d'une telle route de secours pour assurer la fourniture dudit service en utilisant ledit dispositif diffusant comme relais, **caractérisé en ce que** ledit dispositif de secours appartient à un ensemble de dispositifs de secours dans lesquels des identifiants dédiés dits de secours, reconnaissables par ladite passerelle résidentielle, ont été configurés, ces dispositifs de secours diffusant lesdits identifiants dédiés de secours avec lesquels ils ont été configurés, et **en ce que** la passerelle résidentielle a détecté la présence dudit dispositif de secours en écoutant et en reconnaissant au moins un dit identifiant dédié de secours, diffusé par ledit dispositif de secours.

10. Procédé de restauration de service selon la revendication 9, **caractérisé en ce que**, suite à ladite sélection d'au moins une route de secours, il comprend une étape de mise à jour d'une table de routage comprenant ladite route de secours.

11. Procédé de restauration de service selon la revendication 10, **caractérisé en ce que** ladite table de routage comprend ladite route de secours avant ladite détection d'une panne.

12. Procédé de restauration de service selon l'une quelconque des revendications 9 à 11, **caractérisé en ce que** ledit identifiant de secours est caractéristique de la technologie de ladite interface de secours et/ou dudit service.

13. Procédé de restauration de service selon l'une quelconque des revendications 9 à 12, **caractérisé en ce que** ladite détection de panne est réalisée par ladite passerelle, et **en ce que** la passerelle met alors en œuvre les étapes suivantes :
- recherche d'au moins une route pouvant la connecter à au moins un Centre de Supervision des Passerelles, et
- si elle trouve une telle route, utilisation de cette route pour envoyer au moins un rapport de panne à au moins un Centre de Supervision des Passerelles.

14. Procédé de restauration de service selon la revendication 13, **caractérisé en ce que** ladite passerelle résidentielle envoie ledit rapport de panne via une interface IP ou via la couche de liaison de données.

15. Moyen de stockage de données inamovible, ou partiellement ou totalement amovible, comportant des instructions de code de programme informatique pour l'exécution de toutes les étapes d'un procédé de restauration de service selon l'une quelconque des revendications 9 à 14.

16. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution de toutes les étapes d'un procédé de restauration de service selon l'une quelconque des revendications 9 à 14, lorsqu'il est exécuté sur un ordinateur.

## Patentansprüche

1. Residential-Gateway, das Einrichtungen enthält, um nach Erfassung einer Störung, die darin besteht, dass mindestens ein Dienst, zu dem das Gateway normalerweise den Zugang erlaubt, nicht mehr zugänglich ist, oder dass die Qualität mindestens eines Diensts, zu dem es normalerweise den Zugang erlaubt, verschlechtert ist:
- mindestens eine IP-Route, Hilfsroute genannt, zu einem Empfänger von dem Dienst zugeordneten Daten zu suchen, wobei die Hilfsroute verläuft
• über eine IP-Schnittstelle des Residential-Gateways, Hilfsschnittstelle genannt, anders als die Verbindung zwischen dem Residential-Gateway und seiner nominalen Netzanschlussausrüstung, und
• über eine andere kommunizierende Vorrichtung, Hilfsvorrichtung genannt, mit der das Residential-Gateway eine Netzassoziation aufbauen kann, und
- eine solche Hilfsroute auszuwählen, um die Lieferung des Diensts zu gewährleisten, indem die verbreitende Vorrichtung als Relais verwendet wird,
**dadurch gekennzeichnet, dass** die Hilfsvorrichtung zu einer Einheit von Hilfsvorrichtungen gehört, bei denen dedizierte so genannte Hilfskennungen, die vom Residential-Gateway erkannt werden können, konfiguriert wurden, wobei diese Hilfsvorrichtungen die dedizierten Hilfskennungen verbreiten, mit denen sie konfiguriert wurden, und dass das Residential-Gateway außerdem Einrichtungen enthält, um das Vorhandensein der Hilfsvorrichtung zu erfassen, indem sie mindestens eine dedizierte Hilfskennung abhören und erkennen, die von der Hilfsvorrichtung verbreitet wird.

2. Residential-Gateway nach Anspruch 1, **dadurch gekennzeichnet, dass** es Einrichtungen enthält, um nach der Auswahl mindestens einer Hilfsroute eine die Hilfsroute enthaltende Routing-Tabelle zu aktualisieren.

3. Residential-Gateway nach Anspruch 2, **dadurch gekennzeichnet, dass** die Routing-Tabelle die Hilfsroute vor der Erfassung einer Störung enthält.

4. Residential-Gateway nach einem der Ansprüche 1 bis 3, **dadurch gekennzeichnet, dass** es außerdem Einrichtungen enthält, um:
- die Störung zu erfassen,
- mindestens eine Route zu suchen, die es mit mindestens einer Überwachungszentrale der Gateways verbinden kann, und
- wenn es eine solche Route findet und wenn es eine Störung erfasst, diese Route zu verwenden, um mindestens einen Störungsbericht an mindestens eine Überwachungszentrale der Gateways zu schicken.

5. Residential-Gateway nach Anspruch 4, **dadurch gekennzeichnet, dass** es Einrichtungen enthält, um den Störungsbericht über eine IP-Schnittstelle oder über die Datenverbindungsschicht zu schicken.

6. Dienstwiederherstellungssystem, das enthält:
- mindestens ein Residential-Gateway nach einem der Ansprüche 1 bis 5, und
- mindestens eine andere kommunizierende Vorrichtung, Hilfsvorrichtung genannt, die Einrichtungen enthält, um als Relais für das Residential-Gateway zu dienen, um das Liefern des Diensts zu gewährleisten, sowie Einrichtungen, um eine dedizierte Hilfskennung zu verbreiten, die vom Residential-Gateway erkannt werden kann und mit der es konfiguriert wurde.

7. Dienstwiederherstellungssystem nach Anspruch 6, **dadurch gekennzeichnet, dass** die Hilfskennung für die Technologie der Hilfsschnittstelle und/oder des Diensts charakteristisch ist.

8. Dienstwiederherstellungssystem nach Anspruch 6 oder Anspruch 7, **dadurch gekennzeichnet, dass** die Hilfsvorrichtung außerdem Einrichtungen enthält, um vorübergehend die Verbreitung der dedizierten Hilfskennung zu beenden, wenn sie nicht über eine betriebsbereite IP-Route verfügt, um den oder die Dienst(e) zu liefern, die dieser dedizierten Hilfskennung zugeordnet ist (sind).

9. Dienstwiederherstellungsverfahren, das die folgenden Schritte enthält:
- Erfassung einer Störung, die darin besteht, dass mindestens ein Dienst, zu dem ein Residential-Gateway normalerweise den Zugang erlaubt, nicht mehr zugänglich ist, oder dass die Qualität mindestens eines Diensts, zu dem ein Residential-Gateway normalerweise den Zugang erlaubt, verschlechtert ist,
- Suche durch das Gateway mindestens einer IP-Route, Hilfsroute genannt, zu einem Empfänger von dem Dienst zugeordneten Daten, wobei die Hilfsroute verläuft
• über eine IP-Schnittstelle des Residential-Gateways, Hilfsschnittstelle genannt, anders als die Verbindung zwischen dem Residential-Gateway und seiner nominalen Netzanschlussausrüstung, und
• über eine andere kommunizierende Vorrichtung, Hilfsvorrichtung genannt, mit der das Residential-Gateway eine Netzassoziation aufbauen kann, und
- Auswahl einer solchen Hilfsroute durch das Residential-Gateway, um die Lieferung des Diensts zu gewährleisten, indem die verbreitende Vorrichtung als Relais verwendet wird,
**dadurch gekennzeichnet, dass** die Hilfsvorrichtung zu einer Einheit von Hilfsvorrichtungen gehört, bei denen dedizierte so genannten Hilfskennungen, die vom Residential-Gateway erkannt werden können, konfiguriert wurden, wobei diese Hilfsvorrichtungen die dedizierten Hilfskennungen verbreiten, mit denen sie konfiguriert wurden, und dass das Residential-Gateway das Vorhandensein der Hilfsvorrichtung erfasst hat, indem es mindestens eine dedizierte Hilfskennung abhört und erkennt, die von der Hilfsvorrichtung verbreitet wird.

10. Dienstwiederherstellungsverfahren nach Anspruch 9, **dadurch gekennzeichnet, dass** es nach der Auswahl mindestens einer Hilfsroute einen Schritt der Aktualisierung einer die Hilfsroute enthaltenden Routing-Tabelle enthält.

11. Dienstwiederherstellungsverfahren nach Anspruch 10, **dadurch gekennzeichnet, dass** die Routing-Tabelle die Hilfsroute vor der Erfassung einer Störung enthält.

12. Dienstwiederherstellungsverfahren nach einem der Ansprüche 9 bis 11, **dadurch gekennzeichnet, dass** die Hilfskennung für die Technologie der Hilfsschnittstelle und/oder des Diensts charakteristisch ist.

13. Dienstwiederherstellungsverfahren nach einem der Ansprüche 9 bis 12, **dadurch gekennzeichnet, dass** die Störungserfassung vom Gateway durchgeführt wird, und dass das Gateway dann die folgenden Schritte anwendet:
- Suche mindestens einer Route, die es mit mindestens einer Überwachungszentrale der Gateways verbinden kann, und
- wenn es eine solche Route findet, Verwendung dieser Route, um mindestens einen Störungsbericht an mindestens eine Überwachungszentrale der Gateways zu schicken.

14. Dienstwiederherstellungsverfahren nach Anspruch 13, **dadurch gekennzeichnet, dass** das Residential-Gateway den Störungsbericht über eine IP-Schnittstelle oder über die Datenverbindungsschicht schickt.

15. Nicht entfernbare oder teilweise oder vollständig entfernbare Datenspeichereinrichtung, die EDV-Programmcodeanweisungen zur Ausführung aller Schritte eines Dienstwiederherstellungsverfahrens nach einem der Ansprüche 9 bis 14 aufweist.

16. Computerprogramm, das von einem Kommunikationsnetzwerk heruntergeladen werden kann und/oder auf einem computerlesbaren Träger gespeichert und/oder von einem Mikroprozessor ausführbar ist, **dadurch gekennzeichnet, dass** es Anweisungen zur Ausführung aller Schritte eines Dienstwiederherstellungsverfahrens nach einem der Ansprüche 9 bis 14 enthält, wenn es auf einem Computer ausgeführt wird.

## Claims

1. Residential gateway, comprising means for, following the detection of a failure consisting in that at least one service to which said gateway normally allows access is no longer accessible or in that the quality of at least one service to which it normally provides access is degraded:
- searching for at least one IP route, called a backup route, to a recipient of data associated with said service, said backup route passing
• through an IP interface of said residential gateway, called a backup interface, other than the link between the residential gateway and its nominal network connection equipment, and
• through another communicating device, called a backup device, with which the residential gateway is able to establish a network association, and
- selecting such a backup route to ensure the provision of said service using said broadcasting device as a relay,
**characterized in that** said backup device belongs to a set of backup devices in which dedicated identifiers, called backup identifiers, which are recognizable by said residential gateway, have been configured, these backup devices broadcasting said dedicated backup identifiers with which they have been configured, and **in that** said residential gateway further comprises means for detecting the presence of said backup device by listening for and recognizing at least one said dedicated backup identifier broadcast by said backup device.

2. Residential gateway according to Claim 1, **characterized in that** it comprises means for, following said selection of at least one backup route, updating a routing table comprising said backup route.

3. Residential gateway according to Claim 2, **characterized in that** said routing table comprises said backup route before said detection of a failure.

4. Residential gateway according to any one of Claims 1 to 3, **characterized in that** it further comprises means for:
- detecting said failure,
- searching for at least one route that can connect it to at least one gateway supervision centre, and
- if it finds such a route and if it detects a failure, using this route to send at least one failure report to at least one gateway supervision centre.

5. Residential gateway according to Claim 4, **characterized in that** it comprises means for sending said failure report via an IP interface or via the data link layer.

6. Service restoration system, comprising:
- at least one residential gateway according to any one of Claims 1 to 5, and
- at least one other communicating device, called a backup device, comprising means for serving as a relay for said residential gateway to ensure the provision of said service, and means for broadcasting a dedicated backup identifier recognizable by the residential gateway and with which it has been configured.

7. Service restoration system according to Claim 6, **characterized in that** said backup identifier is characteristic of the technology of said backup interface and/or of said service.

8. Service restoration system according to Claim 6 or Claim 7, **characterized in that** said backup device further comprises means for temporarily ceasing broadcasting said dedicated backup identifier when it does not have an operational IP route for providing the one or more services associated with this dedicated backup identifier.

9. Service restoration method, comprising the following steps:
- detecting a failure consisting in that at least one service to which a residential gateway normally allows access is no longer accessible or in that the quality of at least one service to which a residential gateway normally provides access is degraded,
- said gateway searching for at least one IP route, called a backup route, to a recipient of data associated with said service, said backup route passing
• through an IP interface of said gateway, called a backup interface, other than the link between the gateway and its nominal network connection equipment, and
- through another communicating device, called a backup device, with which the residential gateway is able to establish a network association, and
- the residential gateway selecting such a backup route to ensure the provision of said service using said broadcasting device as a relay, **characterized in that** said backup device belongs to a set of backup devices in which dedicated identifiers, called backup identifiers, which are recognizable by said residential gateway, have been configured, these backup devices broadcasting said dedicated backup identifiers with which they have been configured, and **in that** the residential gateway has detected the presence of said backup device by listening for and recognizing at least one said dedicated backup identifier broadcast by said backup device.

10. Service restoration method according to Claim 9, **characterized in that**, following said selection of at least one backup route, it comprises a step of updating a routing table comprising said backup route.

11. Service restoration method according to Claim 10, **characterized in that** said routing table comprises said backup route before said detection of a failure.

12. Service restoration method according to any one of Claims 9 to 11, **characterized in that** said backup identifier is characteristic of the technology of said backup interface and/or of said service.

13. Service restoration method according to any one of Claims 9 to 12, **characterized in that** said failure detection is performed by said gateway, and **in that** the gateway then implements the following steps:
- searching for at least one route that can connect it to at least one gateway supervision centre, and
- if it finds such a route, using this route to send at least one failure report to at least one gateway supervision centre.

14. Service restoration method according to Claim 13, **characterized in that** said residential gateway sends said failure report via an IP interface or via the data link layer.

15. Non-removable, or partially or completely removable, data storage means comprising computer program code instructions for executing all of the steps of a service restoration method according to any one of Claims 9 to 14.

16. Computer program that can be downloaded from a communication network and/or stored on a medium that can be read by a computer and/or executed by a microprocessor, **characterized in that** it comprises instructions for executing all of the steps of a service restoration method according to any one of Claims 9 to 14, when it is executed on a computer.
